# EUROPÄISCHE PATENTSCHRIFT

(11) **EP 0 530 519 B1**
(45) Veröffentlichungstag und Bekanntmachung des Hinweises auf die Patenterteilung: **15.11.1995**
(21) Anmeldenummer: 92113291.6
(22) Anmeldetag: 05.08.1992
(51) Int. Cl.: G21D 5/08

(54) **Kraftwerksanlage mit nuklearer und fossiler Feuerung**
Power plant heated with nuclear and fossil energy
Centrale électrique chauffée par l'énergie nucléaire et fossile

(30) Priorität: 05.09.1991 CH 2611/91
(43) Veröffentlichungstag der Anmeldung: 10.03.1993
(73) Patentinhaber: ASEA BROWN BOVERI AG, 5400 Baden (CH)
(72) Erfinder: Frutschi, Hans Ulrich, CH-5223 Riniken (CH); Kugeler, Kurt, Prof. Dr., W-5170 Jülich (DE)
(74) Vertreter: Hetzer, Hans Jürgen

(56) Entgegenhaltungen:
- EP-A- 0 410 118
- EP-A- 0 424 660
- FR-A- 2 253 254
- NUCLEAR TECHNOLOGY, Band 79, Nr. 2, November 1987, Seiten 135-143, La Grange Park, Illinois, US; S. BRANDES et al.: "HTR-100 industrial nuclear power plant for generation of heat and electricity"

## Beschreibung

### Technisches Gebiet

Die vorliegende Erfindung betrifft eine Kraftwerksanlage gemäss Oberbegriff des Anspruchs 1. Sie betrifft auch ein Verfahren zum Betrieb einer solchen Anlage.

### Stand der Technik

Der HTR (Hochtemperaturreaktor) verspricht ein maximal mögliches Sicherheitspotential und eine sehr gute Ausnützung der Spaltstoffe. Seine Realisierung ist demzufolge erklärtes Ziel. Zahlreiche Studien haben gezeigt, dass die Investitionskosten zur Zeit noch sehr hoch sind, um im Quervergleich zu anderen Konzepten eine Wirtschaftlichkeit zu erhalten. Wird die reine Einkreisanlage angestrebt, d.h. ein in den Reaktorkühlteil integrierter Heliumturbinenkreislauf, ergeben sich sehr hohe Kosten, denn alle Bestandteile dieses Heliumkreislaufes müssen aus Sicherheitsgründen in einem beispielsweise aus vorgespanntem Beton gefertigten Druckgefäss eingeschlossen sein. Diese Komponenten umfassen den Heliumturbosatz, den Rekuperator, den Vorkühler und eventuell einen Zwischenkühler, sowie die umfangsreichen Verbindungsleitungen und Ventile für die Regelung. Ein besonderes Gefahrenpotential bei einem in den Kühlkreis des Reaktorskern integrierten Gasturbinensystem bilden mögliche grosse Drucktransienten bei einem internen Bruch einer Koaxialleitung, einer Tragplatte eines Wärmeaustauschers oder bei einer spontanen Entschaufelung von Turbine oder Verdichter. Solche Drucktransienten könnten Innenisolationen, Liner und Kerneinbauten mechanisch gefährden. Aber auch ein Wassereinbruch bei einem defekten Vor- oder Zwischenkühler stellt ein kaum zu umgehendes Gefahrenpotential dar.
Eine andere Lösung nach Stand der Technik stellt die sogenannte Zweikreisanlage dar. Hier wird das Reaktorkühlmedium Helium mittels Gebläsen umgewälzt und die thermische Reaktorleistung so auf primärseitig integrierte Dampferzeuger übertragen. Hier ist die Gefahr von Drucktransienten weitgehend gebannt, weil der Kühlkreislauf zwischen seinen Komponenten Reaktor, Gebläse und Dampferzeugerheizflächen keine grossen Druckunterschiede aufweist. Die Gefahr eines Dampf- bzw. Wassereinbruches in den Primärkreis ist jedoch eher grösser, als im Falle des direkten Heliumturbinenkreislaufes, denn der Dampf- bzw. Wasserdruck übersteigt jenen des Heliums bei weitem.
Eine sicherheitsmässig günstige Lösung wäre die Trennung des primären Reaktorkühlkreises und des sekundären Konversionskreises durch einen Helium/Helium Wärmeaustauscher. Dieser wäre zusammen mit den Heliumumwälzgebläsen und dem Reaktorkern in ein Dampfgefäss integriert. Der Konversionskreis wäre ein Heliumturbinensystem. Indessen, bei einer solchen Anordnung ist der erzielbare Konversionswirkungsgrad der thermischen Reaktorleistung in elektrische Leistung relativ niedrig, weil die Heliumturbine nur mit etwa 800°C beaufschlagt werden kann. Dies und die hohen spezifischen Kosten einer Heliumturbinenanlage mit notwendigerweise hocheffizienten Rekuperator und Zwischkühlung der Kompression sind der Realisierung einer derartigen Lösung hinderlich.

Kraftwerksanlagen mit nuklearer und fossiler Feuerung sind aus EP-A-0 424 660 und FR-A-2 253 254 bekannt.

### Darstellung der Erfindung

Hier will die Erfindung Abhilfe schaffen. Der Erfindung, wie sie in den Ansprüchen gekennzeichnet ist, liegt die Aufgabe zugrunde, bei einer Kraftwerksanlage der eingangs genannten Art einen gangbaren Weg für die Integrierung eines Hochtemperaturreaktors, der in Wirkverbindung zu den übrigen Kreisläufen steht, vorzuschlagen.

Der wohl wesentliche Vorteil der Erfindung ist darin zu sehen, dass damit eine Substitution fossiler Brennstoffe durch Nuklearenergie, insbesondere zwecks Minderung der CO2-Produktion, möglich wird. Dies lässt sich erfindungsgemäss durch die Schaffung eines Nuklear-Fossilen-Hybridkraftwerkes erreichen, bei welchem die thermische Leistung des Kernreaktors die Brennluft eines Gasturbinen/Dampfturbinen-Kraftwerkes etwa zu 50% vorwärmt, was durch einen Helium/Luft-Wärmeaustauscher geschieht.
Ein weiterer wesentlicher Vorteil der Erfindung liegt in den Sicherheitsaspekten begründet: Die Gefahr von schnellen Drucktransienten und Wassereinbrüchen wird mithin entschärft bzw. minimiert.
Die wirtschaftlichen Vorteile ergeben sich aus den niedrigen spezifischen Kosten der Kombianlage als Konversionssystem einerseits und deren konkurrenzloser Wirkungsgrad andererseits. Ausgehend vom Stand der Technik lässt sich mit der Erfindung etwa die halbe Brennstoffenergie nuklear und die andere Hälfte fossil, beispielsweise Erdgas, zuführen, wobei beide Primärenergien mit ca. 50% Wirkungsgrad in Elektrizität umgesetzt werden. In näher Zukunft kann dieser Wirkungsgrad auf ca. 60% ansteigen.
Die Nachwärmeabfuhr kann über den Luftkreislauf der Gasturbine des Kombiprozesses geschehen, und als redundantes System kann ein Helium/Helium- oder ein Helium/Luft-Wärmeaustauscher vorgesehen werden. Auf Wasser kann sonach vollends verzichten werden.
Die durch ein solches Hybridsystem aus HTR/Kombianlage zustandegekommenen Vorteile lassen sich, nicht abschliessend, wie folgt umschreiben:
- Hoher Wirkungsgrad von bis zu 60% des Gesamtsystemes;
- Grosser Anteil an Nuklearenergie am ganzen Wärmeverbrauch des Kraftwerkes, mit einer Rate bis zu 60% und mehr;
- Signifikante Reduktion des CO2-Ausstosses durch Kernenergie, möglich auch durch Sonnenenergie über einen Receiver;
- Vermeidung eines Wassereinbruches beim HTR;
- Niedrige Reaktoreintrittstemperatur des Kühlmittels im HTR;
- Möglichkeit, die Kernenergieanlagen wirtschaftlich auch in kleinen Leistungseinheiten einzusetzen;
- Alle technischen Verbesserungen des Kombiprozesses kommen voll der Gesamtanlage zu Gute;
- Optimale Kraft/Wärme-Kopplung durch Dampfentnahme gegeben;
- Koppelung zweier Serienprodukte (modulares HTR, Kombianlage) möglich, wodurch daraus eine Verbilligung des Systems resultiert;
- Relativ einfaches Regelverhalten des ganzen Systems;
- Weiterbetrieb der Kombianlage mit voller Leistung bei Stillstand des Reaktors möglich;
- Störfall durch Lufteinbruch wird beherrscht, durch pHe ≧ pLuft und durch beschichtete Brennerelemente.

Vorteilhafte und zweckmässige Weiterbildungen der erfindungsgemässen Aufgabenlösung sind in den weiteren abhängigen Ansprüchen gekennzeichnet.

Im folgenden wird anhand der Zeichnung ein Ausführungsbespiel der Erfindung näher erläutert. Alle für das unmittelbare Verständnis der Erfindung nicht erforderlichen Elemente sind fortgelassen. Die Strömungsrichtung der Medien ist mit Pfeilen angegeben.

### Kurze Beschreibung der Zeichnung

Die einzige Figur zeigt:
eine Schaltung eines konventionellen Kombiprozesses in Wirkverbindung mit einem modularen HTR.

### Wege zur Ausführung der Erfindung, gewerbliche Verwertbarkeit

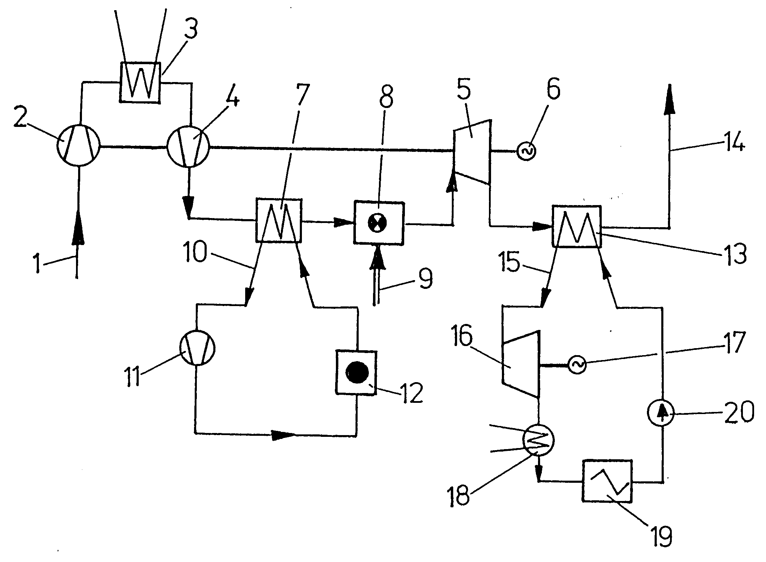

Fig. 1 zeigt eine Schaltung einer Kraftwerksanlage, welche einerseits aus einer Gasturbogruppe mit einer nachgeschalteten Dampfturbogruppe besteht, andererseits ist diese Kombianlage mit einem Hochtemperaturreaktor (HTR) geschaltet. Die Gasturbogruppe besteht grundsätzlich aus Verdichter, Brennkammer und Gasturbine. Vorliegend wird die angesaugte Luft 1 zu einem ersten Verdichter 2 geleitet, in welchem eine erste Kompression stattfindet. Anschliessend durchströmt diese verdichtete Luft einen Wärmeaustauscher 3, in welchem eine kalorische Teilentspannung dieser Luft stattfindet. Stromabwärts dieses Wärmeaustauschers 3 wird die Luft durch einen zweiten Verdichter 4 geleitet, in welchem die Endkompression der Luft stattfindet. Auf dem Weg zur Brennkammer 8 durchströmt die verdichtete Luft zunächst einen Wärmeaustauscher 7, worin eine erste kalorische Aufbereitung der verdichteten Luft zu Heissgas stattfindet. Auf die mit dem letztgenannten Wärmeaustauscher zusammenhängende Schaltung wird weiter unten eingegangen. Nach dem Durchlauf des Wärmeaustauschers 7 strömen diese Heissgase in die bereits erwähnte Brennkammer 8, in welcher die kalorische Endaufbereitung der Heissgase bis zu einer Temperatur von ca. 1200°C stattfindet. Als Brennstoff 9 zum Betrieb der Brennkammer 8 kommen gasförmige und/oder flüssige Brennstoffe in Frage. Die in der Brennkammer 8 aufbereiteten Heissgase beaufschlagen im anschliessenden Prozess eine Gasturbine 5, wobei hier eine Kopplung zu einem Generator 6 besteht. Die Gasturbinenabgase werden nun folgerichtig nicht mehr abgeblasen, sondern sie strömen durch einen Abhitzekessel 13, in welchem durch Wärmeaustausch die Dampferzeugung 15 für die Beaufschlagung einer Dampfturbine 16 bereitgestellt wird. Beim summarisch dargestellten Abhitzekessel 13 handelt es sich vorzugsweise um einen Zweidruck-Abhitzekessel. Selbstverständlich kann auch ein Eindruck-Abhitzekessel eingesetzt werden, Jener hat aber gegenüber diesem den Vorteil, dass die Temperatur der Rauchgase 14 tiefer abgesenkt werden kann, womit der Wirkungsgrad der Anlage gesteigert wird. Wahlweise kann der Abhitzekessel 13 mit einer nicht dargestellten Zusatzfeuerung erweitert werden, welche die Gasturbinenabgase auf ein höheres Temperaturniveau aufbereiten kann. Die letztgenannte Vorkehrung erweist sich dann als vorteilhaft, wenn bei Lastspitzen die Stromleistung der Anlage zu steigern ist. Möglich ist ferner auch der Einsatz eines Dreidruck-Abhitzekessels. Aus der thermischen Energie der Gasturbinenabgase wird also vorwiegend Hoch- und Niederdruckdampf erzeugt, der die Dampfturbine 16 oder weitere nicht gezeigte Dampfturbinengruppen beaufschlagt. Die Dampfturbine 16 ist mit einem weiteren Generator 17 gekoppelt, wobei vorteilhaft ist, die Kopplung der Leistung von der Dampfturbine 16 an den gleichen Generator 6 der Gasturbine 5 vorzusehen. Beispielsweise durch die Erzeugung von zwei Dampfdrücken lässt sich das Potential der Gasturbinenabgase optimal ausnützen, dergestalt, dass diese Abgase, die am Ende des Gasturbinenprozesses noch eine Temperatur von ca. 500°C aufweisen, damit bis auf ca. 100° C abgesenkt werden können. Der entspannte Dampf strömt nach Verlassen der Dampfturbine 16 dann in einen Kondensator 18, wobei hier als Abkühlungsmedium Wasser oder Luft zum Einsatz gelangen kann. Durch eine nicht dargestellte Pumpe strömt das Kondensat in einen Vorwärmer 19, und von hier aus in einen ebenfalls nicht gezeigten Speisewasserbehälter und Entgaser. Nach Durchlauf dieser Stufen ist das Kondensat so weit aufbereitet, dass es wieder über eine weitere Förderungspumpe 20 in den Abhitzekessel 13 zur neuerlichen Verdampfung rückgeführt werden kann. Was den Wärmeaustauscher 7 stromauf der Brennkammer 8 betrifft, so ist dieser Bestandteil eines geschlossen, weiteren Kreislaufes, der thermisch durch einen Hochtemperaturreaktor 12 getragen wird. Als Arbeitsmedium wird hier vorzugsweise Helium eingesetzt, wobei dieses Gas in dem Hochtemperaturreaktor 12 bis auf ca. 1000°C erwämt wird. Diese Wärme wird im Wärmeaustauscher 7 der dort durchströmenden komprimierten Luft übertragen, wobei dann diese Arbeitsluft, vor Eintritt in die Brennkammer 8, bereits eine kalorische Aufbereitung von bis zu 950°C erfahren hat, sonach braucht die Brennkammer 8 nur noch die restliche Temperatursteigerung zu bewerkstelligen. Die Temperaturabsenkung des Heliums durch die Wärmeaustauschung ist an sich recht gross, herrscht doch nach der Wärmeaustauschung beim Helium bloss noch eine Temperatur von 250-350°C vor. Stromab dieses Wärmeaustauschers 7 durchströmt das Helium ein Umwälzgebläse 11, bevor das so aufbereitete Gas in den Hochtemperaturreaktor 12 eingeleitet wird, in welchem eine Temperatur des Heliums von ca. 1000°C bereitgestellt wird. Diese sogenannte Hybridschaltung vermag den Wirkungsgrad der Anlage bis zu 60% zu steigern, dies wohlverstanden bei minimierten Schadstoff-Emissionen aus der nunmehr durch den Einsatz des Hochtemperaturreaktors 12 minimierten Mengenbedarf an fossilen Brennstoffen.

Das verdichterbedingte Druckgefälle der Gasturbine 5 kann dadurch erhöht werden, dass unmittelbar stromauf der Gasturbine ein Injektor wirkt, durch dessen Fangdüse die vorverdichtete Luft aus dem Verdichter oder aus den Verdichtern strömt. Die Treibdüse des Injektors wird durch mindestens einen Teil des im Abhitzekessel 13 anfallenden Dampfes 15 beaufschlagt, wodurch die verdichtete Luft weiterverdichtet wird, ohne Leistungsaufnahme aus der Ausbeute der Gasturbine 5. Der Injektor kann auch stromauf der Brennkammer 8 plaziert sein, wobei auch hier die Treibdüse des Injektors durch mindestens einen Teil des im Abhitzekessel 13 anfallenden Dampfes 15 beaufschlagt wird. Der Injektor kann, je nach Anlage, auch stromab der Brennkammer 8 plaziert sein: In einem solchen Fall wird die Treibdüse des Injektors durch die in der Brennkammer 8 aufbereiteten Heissgase beaufschlagt.

Bei der Brennkammer 8 kann es sich um eine isocore Brennkammer handelt, wobei diese Verbrennungsart durch eine Druckwellenmaschine erstellt werden kann, oder bei der Brennkammer kann es sich um eine Gleichdruckbrennkammer handeln.

## Patentansprüche

1. Kraftwerksanlage, bestehend aus einer Gasturbogruppe, mit mindestens einem Verdichter (4), einer Brennkammer (8) und einer Gasturbine (5) sowie einem Generator (6), und einem Dampfkreislauf, mit mindestens einem Abhitzekessel (13), einer Dampfturbine (16) und mit Hilfsmitteln zur Rezirkulation des Kondensates, dadurch gekennzeichnet, dass die Gasturbogruppe in Wirkverbindung mit einem Hochtemperaturreaktor (12) steht, dass das kalorisch im Hochtemperaturreaktor (12) aufbereitete Medium (10) einen Wärmeaustauscher (7) durchströmt, der stromab des Verdichters (4) des Gasturbogruppe und stromauf der Brennkammer (8) plaziert ist.

2. Kraftwerksanlage nach Anspruch 1, dadurch gekennzeichnet, dass der Hochtemperaturreaktor (12) Bestandteil eines geschlossenen Kreislaufes ist, und dass der Wärmeaustauscher (7) die Temperatursenke dieses Kreislaufes ist.

3. Kraftwerksanlage nach Anspruch 1, dadurch gekennzeichnet, dass in der Gasturbogruppe ein Injektor plaziert ist, und dass die Treibdüse des Injektors durch mindestens einen Teil des im Abhitzekessel (13) anfallenden Dampfes (15) beaufschlagbar ist.

4. Kraftwerksanlage nach Anspruch 3, dadurch gekennzeichnet, dass der Injektor stromauf der Brennkammer (8) plaziert ist

5. Kraftwerksanlage nach Anspruch 3, dadurch gekennzeichnet, dass der Injektor stromab der Brennkammer (8) plaziert ist, und dass die Treibdüse des Injektors durch die in der Brennkammer (8) aufbereiteten heissgase beaufschlagbar ist.

6. Kraftwerksanlage nach Anspruch 1, dadurch gekennzeichnet, dass das Medium (10) Helium ist.

7. Kraftwerksanlage nach Anspruch 1, dadurch gekennzeichnet, dass das Medium (10) Natrium ist.

8. Kraftwerksanlage nach Anspruch 1, dadurch gekennzeichnet, dass das Medium (10) Kohlendioxid ist.

9. Verfahren zum Betrieb einer Kraftwerksanlage nach Anspruch 1, dadurch gekennzeichnet, dass die verdichtete Luft im Wärmeaustauscher (7) stromauf der Brennkammer (8) eine kalorische Aufbereitung bis 950°C erfährt, dass dieselben Arbeitsgase in der Brennkammer (8) bis auf 1200°C erhitzt werden.

10. Verfahren nach Anspruch 9, dadurch gekennzeichnet, dass die Wärmesenke im Wärmeaustauscher (7) 600-700°C beträgt.

## Claims

1. Power station installation, consisting of a gas turbine group having at least one compressor (4), combustion chamber (8) and gas turbine (5) and a generator (6), and a steam cycle having at least one waste heat boiler (13), a steam turbine (16) and auxiliaries for recirculating the condensate, characterized in that the gas turbine group is operatively connected to a high-temperature reactor (12), and the medium (10) calorically processed in the high-temperature reactor (12) flows through a heat exchanger (7) which is placed downstream of the compressor (4) of the gas turbine group and upstream of the combustion chamber (8).

2. Power station installation according to Claim 1, characterized in that the high-temperature reactor (12) is a component of a closed cycle, and the heat exchanger (7) is the heat sink of this cycle.

3. Power station installation according to Claim 1, characterized in that an injector is placed in the gas turbine group, and at least a part of the steam (15) arising in the waste heat boiler (13) can be charged to the ejector nozzle of the injector.

4. Power station installation according to Claim 3, characterized in that the injector is placed upstream of the combustion chamber (8).

5. Power station installation according to Claim 3, characterized in that the injector is placed downstream of the combustion chamber (8), and the hot gases processed in the combustion chamber (8) can be charged to the ejector nozzle of the injector.

6. Power station installation according to Claim 1, characterized in that the medium (10) is helium.

7. Power station installation according to Claim 1, characterized in that the medium (10) is sodium.

8. Power station installation according to Claim 1, characterized in that the medium (10) is carbon dioxide.

9. Process for operating a power station installation according to Claim 1, characterized in that the compressed air undergoes caloric processing up to 950°C in the heat exchanger (7) upstream of the combustion chamber (8), and the same working gases are heated up to 1200°C in the combustion chamber (8).

10. Process according to Claim 9, characterized in that the heat sink in the heat exchanger (7) is at 600-700°C.

## Revendications

1. Installation de centrale électrique, se composant d'un groupe de turbines à gaz, avec au moins un compresseur (4), une chambre de combustion (8) et une turbine à gaz (5) ainsi qu'un générateur (6), et un circuit à vapeur, avec au moins une chaudière de récupération (13), une turbine à vapeur (16) et avec des moyens auxiliaires destinés à la recirculation du condensat, caractérisée en ce que le groupe de turbines à gaz est en relation active avec un réacteur à haute température (12), qui fait passer le milieu (10) préparé calorifiquement dans le réacteur à haute température (12) à travers un échangeur de chaleur (7), qui est placé en aval du compresseur (4) du groupe de turbines à gaz et en amont de la chambre de combustion (8).

2. Installation de centrale électrique selon la revendication 1, caractérisée en ce que le réacteur à haute température (12) fait partie d'un circuit fermé, et en ce que l'échangeur de chaleur (7) constitue le puits de température de ce circuit.

3. Installation de centrale électrique selon la revendication 1, caractérisé en ce qu'un injecteur est placé dans le groupe de turbines à gaz, et en ce que la buse de propulsion de l'injecteur admet au moins une partie de la vapeur (15) qui se forme dans la chaudière de récupération (13).

4. Installation de centrale électrique selon la revendication 3, caractérisée en ce que l'injecteur est placé en amont de la chambre de combustion (8).

5. Installation de centrale électrique selon la revendication 3, caractérisée en ce que l'injecteur est placé en amont de la chambre de combustion (8), et en ce que la buse de propulsion de l'injecteur peut admettre les gaz chauds préparés dans la chambre de combustion (8).

6. Installation de centrale électrique selon la revendication 1, caractérisée en ce que le milieu (10) est l'hélium.

7. Installation de centrale électrique selon la revendication 1, caractérisée en ce que le milieu (10) est le sodium.

8. Installation de centrale électrique selon la revendication 1, caractérisée en ce que le milieu (10) est le dioxyde de carbone.

9. Procédé en vue de l'opération d'une installation de centrale électrique selon la revendication 1, caractérisé en ce que l'air comprimé dans l'échangeur de chaleur (7) en amont de la chambre de combustion (8) subit une préparation calorifique jusqu'à 950°C, qui réchauffe ces mêmes gaz de travail dans la chambre de combustion (8) jusqu'à 1 200°C.

10. Procédé selon la revendication 9, caractérisé en ce que le puits de chaleur dans l'échangeur de chaleur (7) est à la température de 600 - 700°C.
